# EUROPÄISCHE PATENTSCHRIFT

(11) **EP 0 773 908 B1**
(45) Veröffentlichungstag und Bekanntmachung des Hinweises auf die Patenterteilung: **17.02.1999**
(21) Anmeldenummer: 95925651.2
(22) Anmeldetag: 26.07.1995
(51) Int. Cl.: C02F 3/30, C02F 3/12

(54) **VERFAHREN UND VORRICHTUNG ZUR REINIGUNG VON ABWÄSSERN, INSBESONDERE FÜR VOLLBIOLOGISCHE HAUSKLÄRANLAGEN**
METHOD AND DEVICE FOR PURIFYING WASTE WATER, IN PARTICULAR FOR FULLY BIOLOGICAL DOMESTIC SEWAGE TREATMENT SYSTEMS
PROCEDE ET DISPOSITIF PERMETTANT D'EPURER DES EAUX USEES, NOTAMMENT POUR DES INSTALLATIONS DOMESTIQUES ENTIEREMENT BIOLOGIQUES D'EPURATION DES EAUX RESIDUAIRES

(30) Priorität: 26.07.1994 AT 1474/94
(43) Veröffentlichungstag der Anmeldung: 21.05.1997
(73) Patentinhaber: SCHWABEGGER, Johann, A-4224 Wartberg/Aist (AT)
(72) Erfinder: SCHWABEGGER, Johann, A-4224 Wartberg/Aist (AT)
(74) Vertreter: Secklehner, Günter, Dr.
(86) Internationale Anmeldenummer: AT9500155
(87) Internationale Veröffentlichungsnummer: WO9603352

(56) Entgegenhaltungen:
- CA-A- 1 155 976
- DE-A- 2 136 871
- FR-A- 2 359 080
- US-A- 3 888 767
- US-A- 4 826 601

## Beschreibung

Die Erfindung betrifft ein Verfahren und eine Vorrichtung zum Reinigen von Abwasser, insbesondere für vollbiologische Kläranlagen, wie diese im Oberbegriff des Patentanspruches 1 und des Patentanspruches 4 beschrieben sind.

Die Erfindung bezieht sich auf ein Verfahren und eine Vorrichtung, bei welchen zum Reinigen von Abwasser, insbesondere für Kläranlagen, Emscherbrunnenanlagen, Hauskläranlagen bzw. Senkgrubenbetriebsweise, vollbiologisch mit wenig Aufwand das Abwasser in eine Belebungskammer, eine Nachklärkammer oder dgl., die in einem Becken untergebracht sind, zugeführt und dort nach einem Belebtschlammverfahren behandelt wird.

Durch den zunehmenden Wohlstand ist der Wasserverbrauch enorm angestiegen und somit auch das Abwasserproblem, da das Abwasser normalerweise in zentralen Abwasserreinigungsanlagen gereinigt wird. Gemeinden, die mit ihrer Kläranlage nicht mehr auf dem neuesten Stand der Technik sind, weil sie nur nitrifizieren, aber nicht denitrifizieren können (Emscherbrunnenanlagen mit Tropfkörper usw.) müssen in naher Zukunft auf andere Systeme umstellen. Genauso müssen für Streusiedlungen, vereinzelte Häuser oder Ortschaften, Berghütten, Schiffe usw. enorme finanzielle Anstrengungen unternommen werden, um diese Gebiete an bestehende Kläranlagen anzuschließen bzw. die Abwässer zu entsorgen.

Es ist bereits eine Kläranlage gemäß CA-A-1 155 976 bekannt, welche aus einem Reaktionsbehälter besteht. Im Innenraum des Reaktionsbehälters befinden sich senkrecht zum Boden verlaufende, voneinander distanziert angeordnete erste Scheidewände, entlang denen endlose Riemen rechtwinkelig zum Boden verlaufen. Diese weisen Rohre auf, welche der Aufnahme von Luft aus einem dem Boden entgegengesetzten, oberhalb eines Flüssigkeitsstandes liegenden Bereich dienen. Zwischen den ersten Scheidewänden und den Reaktionsbehälter begrenzenden Seitenwänden befinden sich Belüftungszonen, in denen zweite Scheidewände angeordnet sind, welche die Belüftungszonen in Abwärts-Belüftungszonen und in Wirbelbettzonen unterteilen. In der zwischen der ersten und der zweiten Scheidewand angeordneten Abwärts-Belüftungszone verläuft ein Teilbereich der Riemen in Richtung zum Boden und nach Umlenkung ein weiterer Teilbereich in einer durch die ersten Scheidewände umgrenzten Belebtschlammkammer in entgegengesetzter Richtung zum Boden.

Über einen in der Symmetrieebene des Redktionsbehälters angeordneten Einlauf gelangt das zu reinigende Abwasser in die Belebtschlammkammer, in welcher Zirkulationsströmungen herrschen, welche durch die Linearbewegungen der endlosen Riemen hervorgerufen werden. Diese bewirken, daß das über den Einlauf eintretende Abwasser in Richtung zum Boden bewegt wird und am Boden in Richtung zu den ersten Scheidewänden fließt. An den ersten Scheidewänden erfolgt durch die Aufwärtsbewegung der Riemen eine Umlenkung des am Boden fließenden Abwassers in Richtung zur Flüssigkeitsoberfläche. Die an den endlosen Riemen angeordneten Rohre, welche im bodenfernen Bereich des Reaktionsbehälters Luft bzw. Sauerstoff aufnehmen, bilden ein Belüftungssystem, welches die Luft bei zum Boden verlaufender Richtung des endlosen Riemens an das in der Abwärts-Belüftungszone befindliche Abwasser abgibt. Dazu weist die zweite Scheidewand im bodennahen Bereich der Abwärts-Belüftungszone einen zum Boden und entgegengesetzt zur ersten Scheidewand gerichteten winkeligen Verlauf auf, wodurch ein durch die erste und zweite Scheidewand begrenzter Querschnitt der Abwärts-Belüftungszone vergrößert wird und die Strömungsgeschwindigkeit des in der Abwärts-Belüftungszone zum Boden verlaufenden Abwasserstromes reduziert wird, wodurch es zu einer Trennung der Luftblasen vom Abwasser kommt, welche teilweise innerhalb der Abwärts-Belüftungszone entgegengesetzt zum Boden aufsteigen.

Die zum Boden gerichtete Strömung in der Abwärts-Belüftungszone wird am Boden in Richtung zur Seitenwand umgelenkt, wodurch das mit dem Belebtschlamm versetzte Abwasser über eine zwischen der zweiten Scheidewand und der Seitenwand angeordneten Öffnung in die Wirbelbettzone eingebracht wird. Die so bewirkte Strömung nimmt jedoch einen Teil der Gasblasen auf, welche ebenfalls in die Wirbelbettzone eingebracht werden.

Nachteilig bei dieser Ausführung ist, daß durch die Strömung des mit Gasblasen versetzten Abwasserstroms in die Wirbelbettzone eine Belebung des darin enthaltenen Klärschlammes und damit ein Aufschäumen stattfindet, wodurch ein unerwünschtes Ausschwemmen des Klärschlammes aus der Kläranlage in einen nachgeordneten Abflußbereich stattfindet. Dies führt einerseits zu verminderter Wasserqualität des Abflußwassers, andererseits macht es eine mechanische Rückführung des im Abflußwasser enthaltenen Klärschlammes erforderlich.

Der Erfindung liegt daher die Aufgabe zugrunde, ein Verfahren und eine Vorrichtung zu entwickeln, um geringe Mengen von Abwässern, wie von Emscherbrunnenanlagen, Hauskläranlagen bzw. Senkgruben, mit wenig Aufwand so zu reinigen, daß trotzdem die Ablaufqualität des Wassers nach der Klärung erreicht wird, die derjenigen bei Großkläranlagen entspricht. Darüber hinaus sollen Betriebs- und Wartungskosten reduziert werden.

Diese Aufgabe der Erfindung bei dem vorgenannten Verfahren wird durch die Maßnahmen im Kennzeichenteil des Patentanspruches 1 gelöst. Durch die überraschend einfache Lösung, bei der für den Rücktransport des Rücklaufschlammes keine eigenen mechanischen Vorrichtungen notwendig sind, aber trotzdem eine Belebtschlammverarbeitung durch Zufuhr von Sauerstoff möglich ist, kann eine Aufarbeitung der anfallenden Abwässer mit geringer Energie erfolgen. Dadurch ist es möglich, Abwassermengen, die bisher in Senkgruben aufgefangen und vor allem in ländlichen Gebieten über weite Strecken kostenaufwendig mit Lastkraftfahrzeugen zu Abwasserreinigungsanlagen bzw. Kläranlagen transportiert werden müssen, direkt vor Ort so zu reinigen, daß eine Zufuhr des gereinigten Abwassers in den normalen Wasserzyklus bzw. Wasserhaushalt möglich ist. Überraschend ist dabei, daß durch die einfache Maßnahme, die ein Aufsteigen des Sauerstoffes in das Nachklärbecken verhindert, eine derart kompakte Bauweise einer Kleinkläranlage ohne mechanische Schlammrückführung erzielt werden kann.

Die Vorteile zu den weiteren in den Unteransprüchen angegebenen Maßnahmen sind in der Beschreibung angegeben.

Die Aufgabe der Erfindung wird aber auch durch eine Vorrichtung der Eingangs genannten Art durch die kennzeichnenden Merkmale im Patentanspruch 4 gelöst. Vorteilhaft ist bei dieser Ausbildung, daß durch eine einfache bauliche Maßnahme, nämlich die spezielle Ausbildung des Schlammdurchlasses bzw. des Ablaufstutzens ein Eintritt der im wesentlichen senkrecht zum Boden aufsteigenden Gasblasen aus Luft bzw. Stickstoff bzw. Sauerstoff in die Nachklärkammer verhindert wird, wodurch eine Belebung des in der Nachklärkammer enthaltenen Klärschlammes und damit ein Aufschäumen desselben und ein Ausschwemmen desselben in den Abflußbereich verhindert wird.

Eine vorteilhafte Weiterbildung ist im Patentanspruch 5 beschrieben, wodurch ohne zusätzliche Maßnahmen nur durch einen entsprechenden Zuschnitt eines einen Anschlußstutzen bildenden Rohres eine gewünschte Überdeckung des Schlammdurchlasses erreicht werden kann, sodaß die aufsteigenden Gasblasen nicht in das Innere der Nachklärkammer gelangen.

Es ist aber auch eine Ausbildung nach Patentanspruch 6 vorteilhaft, da bei einer Ausbildung der Nachklärkammer aus einzelnen Blechplatten durch entsprechende Überlappung der einzelnen Blechplattenteile eine Ablenkung der Gasblasen erzielt werden kann, sodaß diese nicht in das Innere des Nachklärkammer eintreten.

Im nachfolgenden wird die Erfindung anhand der in den Zeichnungen dargestellten Ausführungsbeispiele näher beschrieben.

Es zeigen:
- Fig. 1: eine erfindungsgemäße Vorrichtung zum Reinigen von Abwasser in Draufsicht, geschnitten, gemäß den Linien I-I in Fig. 2 und vereinfachter, schematischer Darstellung;
- Fig. 2: die Vorrichtung nach Fig. 1 in Seitenansicht, geschnitten, gemäß den Linien II-II in Fig. 1 und stark vereinfachter, schematischer Darstellung;
- Fig. 3: eine andere Ausführungsvariante einer erfindungsgemäßen Vorrichtung in Seitenansicht, geschnitten, und stark vereinfachter, schematischer Darstellung.

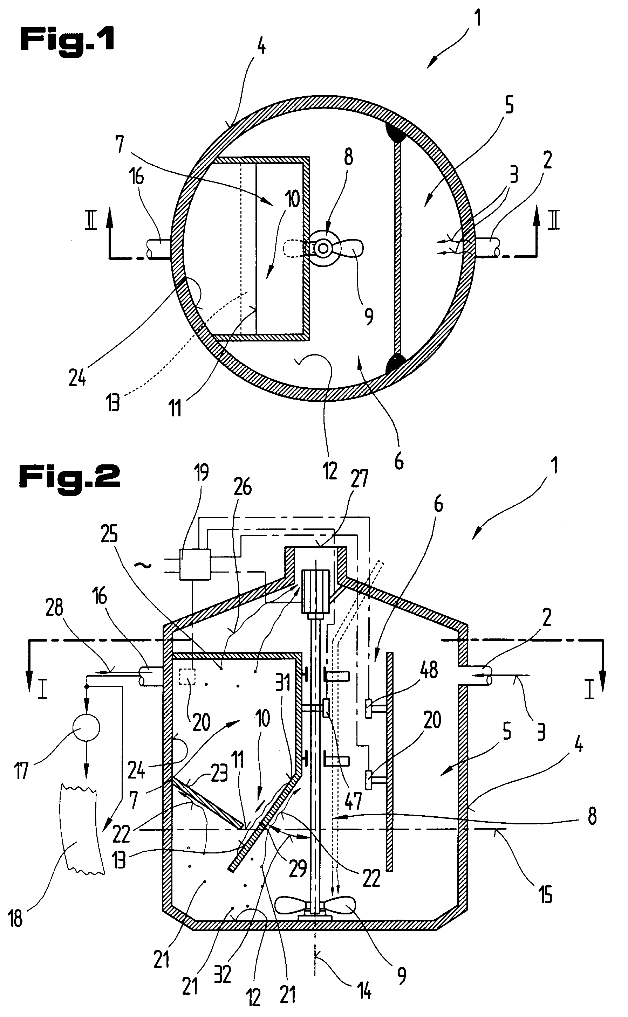

In Fig. 1 ist eine Vorrichtung 1 zum Reinigen des über einen Zulauf 2 zugeführten Abwassers 3 gezeigt, welche bevorzugt als Kleinkläranlage mit einem einzigen Becken 4 ausgebildet ist. In diesem Becken 4 befinden sich verschiedene Kammern, wie eine Denitrifikationskammer 5, eine Belebungskammer 6 und eine Nachklärkammer 7. In der Belebungskammer 6, die auch als Belüftungskammer bezeichnet wird, ist ein Belüftungssystem 8 angeordnet, das zur O₂ - Versorgung Kompressoren, Schläuche und/oder Belüftungsteller und/oder ein Rührwerk 9 umfaßt.

Zwischen der Belebungskammer 6 und der Nachklärkammer 7 ist ein Schlammdurchlaß 10 angeordnet, der beispielsweise durch einen Schlammschlitz 11 gebildet sein kann. Der Schlammschlitz 11 ist in einem einem Boden 12 der Belebungskammer 6 zugewandten unteren Endbereich mit einem den Schlammschlitz 11 überlappenden Schutzschild 13 versehen. Dieses Schutzschild 13 überlappt zumindest eine Querschnittsfläche des Schlammschlitzes 11 bzw. des Schlammdurchlasses 10 in einer zu einer Längsachse 14 der Vorrichtung 1 verlaufenden Ebene 15 - mit strichpunktierten Linien in Fig. 2 eingezeichnet - im Abstand von dieser Ebene 15 überlappt, sodaß ein Eintritt in die Nachklärkammer 7 durch in etwa senkrecht zum Boden 12 bzw. parallel zur Längsachse 14 aufsteigende Gase bzw. Schwebstoffe oder dgl. verhindert ist, wie dies im Nachfolgenden noch im Detail erläutert werden wird.

In dem vom Boden 12 abgewendeten oberen Endbereich der Nachklärkammer 7 ist ein Ablauf 16 angeordnet, der gegebenenfalls unter Zwischenschaltung eines Gebrauchwasserspeichers 17, aus dem die gereinigte Flüssigkeit bzw. das Wasser z.B. zum Gießen für Rasen und Sträucher oder für Klospülungen entnommen werden kann, in einen Vorfluter 18 mündet. Zur Steuerung des Belüftungssystems 8 bzw. des Rührwerks 9 ist eine Steuerung 19 angeordnet.

Die Funktion der Vorrichtung 1 zum Reinigen von Abwässern 3 ist nun folgendermaßen:

Das verschmutzte Abwasser 3 wird über den Zulauf 2 der Vorrichtung 1 bzw. der Hauskläranlage zugeführt. Über diesen Zulauf 2 gelangt es direkt in die Denitrifikationskammer 5, wo es mit dem Belebtschlamm mittels des Belüftungssystems 8 vermischt wird.

Danach wird durch das Einblasen bzw. Einsaugen des Sauerstoffs oder der Luft mit dem Belüftungssystem 8 das Abwasser-Schlammgemisch mit Sauerstoff angereichert.

Durch diese Sauerstoffanreicherung mit dem Belüftungssystem 8 soll in der Belebungskammer 6 ein O₂ - Gehalt von 1,5 bis 3,5 mg/l erreicht werden. Dazu ist eine Belüftungszeit von ca. 10 bis 60 min erforderlich. In dieser als Nitrifikationsphase bezeichneten Reinigungsphase des Abwassers 3 soll nun mittels der aeroben Bakterienstämme ein Abbau der Wasserverschmutzung dadurch erfolgen, daß das Ammonium (NH₄N) in Nitrit bzw. Nitrat umgewandelt wird. Durch die Vorschaltung der Denitrifikationskammer 5 wird neben dem Nitratabbau aber auch eine biologische Phosphatfällung erreicht.

An diese Belüftungsphase schließt sich die Denitrifikationsphase an, die zwischen 30 und 90 min, bevorzugt 50 bis 70 min, betragen kann. Die Abschaltung bzw. Beendigung der Belüftung mit dem Belüftungssystem 8 kann durch Feststellung des O₂ - Gehalts, beispielsweise mittels Sonden 20, von welchen zumindest eine z.B. in der Belebungskammer 6 bevorzugt ortsfest angeordnet sein kann, oder durch eine sogenannten Redox- bzw. O₂ - Steuerung oder beispielsweise auch über eine Festlegung von Vorgabezeiten, also Erfahrungswerten, über eine Zeitschaltuhr oder sonstiges erfolgen. In dieser Stehzeit zwischen den einzelnen Belüftungsphasen erfolgt dann die sogenannte Denitrifizierung, während der das Nitrat weitgehend reduziert wird. Dieser Denitrifikationsvorgang wird durch die kurzzeitigen Einschaltungen des Rührwerks 9, um eine ständige Durchmischung des neu zufließenden Abwassers 3 mit Belebtschlamm zu erreichen, nicht gestört.

Während dieser Denitrifikationsphase sinkt auch der während der Belüftung und der Umwälzung des gesamten Inhaltes der Belebungskammer 6 durch die Schlammschlitze 11 in die Nachklärkammer 7 hochgedrückte Belebtschlamm von der Nachklärkammer 7 wieder in die Belebungskammer 6. Es ist daher darauf zu achten, daß eine Sinkgeschwindigkeit V_{S} des Belebtschlammes bzw. Rücklaufschlammes größer sein soll, als die Flächenbeschickung qA der Nachklärkammer 7 während der Belüftungsphase, um zu verhindern, daß Belebtschlamm durch den Ablauf 16 abtreiben kann.

Während der Nitrifikationsphase rutscht daher der Rücklaufschlamm von der Nachklärkammer 7 durch den Schlammdurchlaß 10, d.h. durch den Schlammschlitz 11, zurück in die Belebungskammer 6. Dabei wird durch die überlappende Anordnung des Schutzschildes 13 relativ zu dem Schlammschlitz 11 bzw. dem Schlammdurchlaß 10 während des Betriebes der Vorrichtung 1 verhindert, daß Gasblasen 21 mit Luft von der Belebungskammer 6 in die Nachklärkammer 7 aufsteigen können. Dies ist insbesondere während des Betriebs des Belüftungssystems 8 wichtig, aber auch während der Nitrifikationsphase, um zu verhindern, daß durch den Eintritt von Gasblasen 21 mit Luft in die Nachklärkammer 7 das Zurückrutschen des Rücklaufschlammes nicht verzögert wird.

Vielmehr wird, wie dies durch Pfeile 22 schematisch in Fig. 2 gezeigt ist, erreicht, daß die hochsteigenden Gasblasen 21 mit Luft gemäß den Pfeilen 22 von dem Schutzschild 13 abgelenkt werden und Somit in der Belebungskammer 6 verbleiben oder von einer Bodenwand 23, die einem Außenmantel 24 des Beckens 4 benachbart ist, und die Nachklärkammer 7 von der diesen umgebende Belebungskammer 6 trennt, ebenfalls seitlich in den die Nachklärkammer 7 umgebenden Bereich der Belebungskammer 6 ablenkt. Gleichermaßen steigt so der während der Belebungsphase freigesetzte Stickstoff gemäß den schematisch angedeuteten Gasblasen 25 gemäß den Pfeilen 26 nach oben und tritt durch eine Auslaßöffnung 27 ins Freie.

Falls im Zuge des Reinigungsvorganges Überschußschlamm entsteht - da sich bei Nahrungsmangel die Bakterien sozusagen gegenseitig auffressen - kann dieser bei größeren Anlagen täglich bis wöchentlich bzw. bei kleineren Anlagen halbjährlich abgezogen werden.

Die Schlammtrockensubstanz sollte jedoch vorzugsweise 1 bis 6 mg/l betragen. Bei der Anordnung der Denitrifikationskammer 5 und der Nachklärkammer 7 ist zu berücksichtigen, daß die Denitrifikationskammer 5, in die der Zulauf 2 für das Abwasser 3 mündet, in Richtung des Bodens 12 der Vorrichtung 1 offen ist, sodaß während der Belüftungsphase mit dem Belüftungssystem 8 der Belebtschlamm entgegen der Zuflußrichtung des Abwassers 3 in der Denitrifikationskammer 5 hochsteigen und sich mit dem frisch zufließenden Abwasser vermischen kann. Die Nachklärkammer 7 soll jedoch von diesem bodenseitigen Auslaß der Denitrifikationskammer 5 soweit entfernt sein, daß kein Abwasserkurzschluß und somit ein direkter Übertritt des Abwassers 3 von der Denitrifikationskammer 5 in die Nachklärkammer 7 erfolgen kann.

Dieses zuvor beschriebene Verfahren hat sich dann bestens bewährt, wenn man das geklärte Abwasser 3, also die gereinigte Flüssigkeit 28, in den Vorfluter 18 zuführt. Soll dem gegenüber diese gereinigte Flüssigkeit 28, die durch den Ablauf 16 abgeführt wird, als Gebrauchswasser verwendet werden, beispielsweise zum Rasengießen, wird nur die Denitrifikationszeit - Stehzeit des Belüftungssystems 8 - verringert, um zu verhindern, daß das Nitrat, welches als Pflanzennährstoff wiederverwendbar ist, im Zuge der Abwasserreinigung aufoxidiert wird und als Stickstoff in Form der schematisch angedeuteten Gasblasen 25 entweicht. Wird die Denitrifikationszeit verringert, so wirkt die Denitriflkationskammer 5 lediglich als Pufferbecken. Vorteilhaft ist daher, daß durch eine entsprechende Anpassung der Vorrichtung 1 an die unterschiedlichen Bedürfnisse das Verfahren an einen optimalen Abwasserkreislauf angepaßt werden kann, um eine optimale Nutzung der anfallenden Abwässer zu ermöglichen.

Für den Betrieb der zuvor beschriebenen Vorrichtung 1 hat es sich als zweckmäßig erwiesen, wenn das Verhältnis zwischen dem Volumen der Belebungskammer 6 und dem Volumen der Denitrifikationskammer 5 in etwa 3:1 beträgt, wogegen das Volumen der Nachklärkammer 7 in Relation zur Belebungskammer 6 ungefähr 1:1 bis 1:3 betragen soll.

Desweiteren ist zu berücksichtigen, daß bei der Feststellung der Menge an Ammonium bzw. Nitrit, beispielsweise über Sonden 20 im Bereich des Ablaufs 16, im Zusammenhang mit der Steuerung 19 die Belüftungsdauer mit der Belüftungsvorrichtung einfach gesteuert werden kann. So kann als Faustregel berücksichtigt werden, daß immer dann, wenn Ammonium in der Flüssigkeit 28 im Ablauf 16 größer ist als 1 mg/l, der Belebtschlamm bzw. das Abwasser 3 in der Belebungskammer 6 länger, d.h. zwischen 0,5 und 1,5 Stunden belüftet werden muß, während bei einer zu großen Menge an Nitrat im Gegensatz dazu die Stillstandszeit des Belüftungssystems 8, also die Dauer der Rührphase oder Belebungsphase, auf beispielsweise 120 min verlängert werden muß.

Selbstverständlich ist die Dauer der Belüftung und der Stillstandszeit auch abhängig von der Menge des zugeführten Abwassers, wobei zur Berechnung dafür die Einwohnergleichwerte für Kläranlagen verwendbar sind.

Vorteilhaft ist desweiteren, daß dieses Verfahren auch bei einer entsprechenden Umänderung des Verfahrensablaufs bei nach dem Prinzip des Emscherbrunnens arbeitenden Kläranlagen eingesetzt werden kann. In diesem Fall muß der Schlammfaulraum des Emscherbrunnens umgekehrt durchflossen werden und wirkt daher dann als Belebungskammer 6 und wird in diesem dann ein Belüftungssystem 8 angeordnet, um die Belüftung des Schlammes bzw. des Rücklaufschlammes 29 in der Belebungskammer 6 zu bewirken. Die Steuerung des Belüftungssystems 8 erfolgt dabei ebenfalls mittels einer Steuerung 19 mittels Zeitschaltuhr, die beim Emscherbrunnen vorhandenen Schlammschlitze 11 dienen dann dazu, daß nach der Belüftungsphase bei Stillstand der Belüftung, also in der sogenannten Denitrifikationsphase, der Rücklaufschlamm 29 von der Nachklärkammer 7 wiederum in die Belebungskammer 6 zurückrutschen kann. Vorteilhaft ist es dabei, wenn das Schutzschild 13 unter einem Winkel 30 gegenüber dem Boden 12 der Vorrichtung 1 um beispielsweise 60° geneigt ist, wobei dieser Winkel 30 gegen die Längsachse 14 zu geöffnet ist. Dies bedeutet, daß das Schutzschild 13 bzw. eine Bodenwand 31 von der Längsachse 14 in Richtung des Außenmantels 24 des Behälters 4 geneigt ist und der zwischen der Längsachse 14 und der Bodenwand 31 eingeschlossene Winkel 32 ca. 30° beträgt. Durch die entsprechende Neigung dieser Bodenwand 31 und des Schutzschildes 13 wird ein gleichmäßiges Rückrutschen des Rücklaufschlammes 29 erreicht.

Selbstverständlich ist es im Rahmen der Erfindung auch möglich, die einzelnen Kammern in einzelnen Behältern unterzubringen und diese mit entsprechenden Rohrleitungen oder dgl. zu verbinden.

Desweiteren ist bei dieser Kleinkläranlage selbstverständlich zu berücksichtigen, daß keine Feststoffabscheidung vorgesehen ist, sodaß sperrige Stoffe wie Plastikreste, Hygieneartikel und dgl. nicht eingeleitet werden dürfen, da dies sonst zu einer Zopfbildung beim Rührwerk 9 führen könnte. Dagegen werden Fäkalien und Klopapier von den zuvor beschriebenen Bakterien zersetzt und umgewandelt.

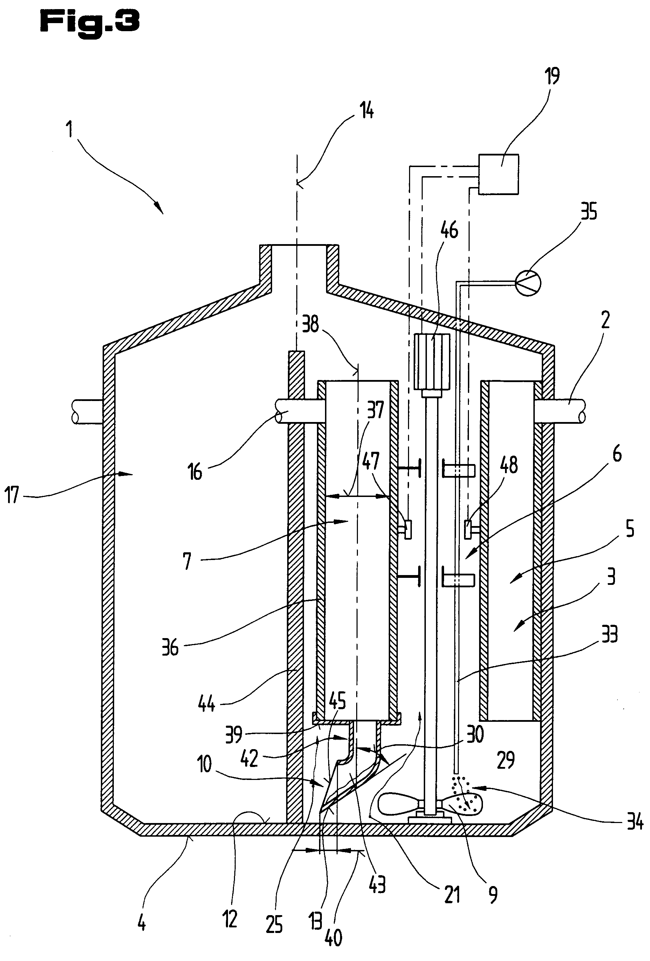

In Fig. 3 ist eine weitere Ausführungsvariante einer erfindungsgemäßen Vorrichtung 1 gezeigt, die aus einer herkömmlichen Zweikammer-Kläranlage, an der drei Einwohner, also mit drei Einwohnergleichwerten (EGW), angeschlossen waren, besteht. Aus diesem Grund wurde ein Teil des Beckens 4 zur Belebungskammer 6 umfunktioniert, die ca. 6 m³ Fassungsvermögen aufweist. Ein z.B. durch ein Rohr abgeteilter Beckenteil wurde als Denitrifikationskammer 5 eingerichtet, in die ein Zulauf 2 mündet. In die Belebungskammer 6 wurde als Belüftungssystem 8 ein Rührwerk 9 und eine Belüftungsleitung 33 zur Zufuhr von Preßluft oder Sauerstoff 34, z.B. über eine Pumpe 35 oder aus Druckluftbehältern, in den Belebtschlamm installiert, welches eine Leistung von weniger als 1 kW/h aufweist.

Desweiteren wurde in der Belebungskammer 6 ein Rohr 36 mit einem Durchmesser 37 von z.B. 80 cm und einer Länge von z.B. 160 cm so eingebaut, daß es mit seiner Längsachse 38 parallel zur Längsachse 14 des Beckens 4 ausgerichtet ist und eine dem Boden 12 zugewandte Stirnseite 39 in einer Distanz von z.B. 40 cm oberhalb des Bodens 12 angeordnet ist. Dieses Rohr 36 dient als Nachklärkammer 7. Im oberen vom Boden 12 abgewandten Bereich dieses Rohres 36 ist ein Ablauf 16 angeordnet, der als Überlauf von der Nachklärkammer 7 in einen Gebrauchwasserspeicher 17, der durch den zweiten Beckenteil der ursprünglichen Zweikammer-Kläranlage gebildet ist, mündet. Dieser weist ebenfalls eine Größe von 6 m³ auf.

Desweiteren wurde in der Belebungskammer 6 auch eine Denitrifikationskammer 5 durch Einbau eines zusätzlichen Rohres 41, in welches der Zulauf 2 einmündet, integriert. Selbstverständlich ist es hier möglich, anstelle des Rohres 41 eine Trennwand in der jeweiligen Kammer des Beckens 4 anzuordnen, die aus Beton, Kunststoff, nicht rostendem Stahl oder dgl. bestehen kann. Um zu verhindern, daß die vom Boden 12 hochsteigenden Gasblasen 21 bzw. 25 in die Nachklärkammer 7 eintreten können, wurde auf das Rohr 36 auf der dem Boden 12 zugewandten Stirnseite ein Stutzen 42 angeordnet, der als Schutzschild 13 wirkt. Dieser Stutzen 42 verschließt den dem Boden 12 zugewandten Querschnittsbereich des Rohres 36 und weist einen Anschlußstutzen 43 auf, der in Richtung einer Mittelwand 44 des Beckens 4 abgewinkelt ist. Das Schutzschild 13, welches ein Einströmen von Gasblasen 21 bzw. 25 mit Luft bzw. Stickstoff in den Innenraum der Nachklärkammer 7 verhindern soll, wird durch eine vom Boden 12 ansteigende, in Richtung der Längsachse 38 geneigte Ausbildung einer Stirnkante 45 des Anschlußstutzens 43 gebildet, wobei der dem Boden 12 näher liegende Rohrwandteil des Anschlußstutzens 43 über die der Nachklärkammer 7 zugewandten Kante um eine Distanz 40 vorragt, sodaß die aufsteigenden Gasblasen 21 bzw. 25 das Rohr 36 der Nachklärkammer 7 umströmen und nicht in dessen Innenraum eintreten können, jedoch beim Aufwirbeln des Belebtschlammes dem Rührwerk 9 des Belüftungssystems 8 der Belebtschlamm sehr wohl in den Innenraum der Nachklärkammer 7 hochgedrückt werden kann und während der nachfolgenden Stillstandszeiten zum Denitrieren sich absetzend Rücklaufschlamm 29 wieder in den Bereich des Rührwerks 9 bzw. des Anschlußstutzens 43 absinken kann.

Das Schutzschild 13 bzw. der in Richtung der Mittelwand 44 vorragende Teil des Anschlußstutzens 43 schließt dabei mit der Längsachse 38 einen Winkel 30 von z.B. 60° ein, der in Richtung des Bodens 12 geöffnet ist. Dies begünstigt auch einen zur Längsachse 14 schrägen Eintritt von Belebtschlamm während der Wirkungsdauer des Belüftungssystems 8. Andererseits verhindert dieses Schutzschild 13 bzw. der vorspringende Teil des Anschlußstutzens 43, daß senkrecht in der Belebungskammer 6 aufsteigende Gasblasen 21 bzw. 25 direkt in die Nachklärkammer 7 aufsteigen können.

Während der ca. 10 min dauernden Belüftungsphase des Belebtschlammes mit dem Belüftungssystem 8 erreichte der Belebtschlamm einen Sauerstoffgehalt von 5 mg/l. Dadurch wurde das Ammonium fast zur Gänze bis auf einen geringfügigen Restwert 0,3 mg/l in Nitrit bzw. in Nitrat umgewandelt. Durch die nachfolgende Stehzeit bzw. Stillstandszeit des Belüftungssystems 8 von 90 min bei Tag und ca. 120 min zwischen 22.00 Uhr und 5.00 Uhr Nachts konnte auch das Nitrat weitgehend abgebaut werden. Während dieser Stillstandszeiten wurde zwar das Belüftungssystem 8 bzw. das Rührwerk 9 alle 10 min kurzfristig für ca. 30 sek eingeschaltet, um den Belebtschlamm von der Belebungskammer 6 aufzurühren, dies erfolgte jedoch nur dazu, um den Belebtschlamm immer wieder mit dem neu zufließenden Abwasser 3 in Verbindung zu bringen bzw. zu durchmischen.

In der übrigen Zeit rutscht der Rücklaufschlamm von der Nachklärkammer 7 über das schräg angeordnete Schutzschild 13 zurück in die Belebungskammer 6. Bei diesem Praxisversuch wurde bei einem Schlammvolumen von 380 ml/l, eine Trockensubstanz von 3,4 mg/l mit einem Index von 110 in der Belebungskammer 6 ermittelt. Um diese Werte schneller zu erreichen, wurde am Beginn 2 m³ Impfschlamm zugesetzt. Bei einer Entnahme von ca. 1 - 2 m³ Überschußschlamm alle drei Monate kann bei einer derartigen Vorrichtung ein geschlossener Schlammkreislauf erreicht werden.

Bei einer Überprüfung der Reinigungskapazität wurde festgestellt, daß die aus dem Abwasser 3 gereinigte Flüssigkeit 28 im Ablauf 16 aus der Nachklärkammer 7 absetzbare Stoffe in einem Ausmaß kleiner als 0,1 aufwies. Die Temperatur lag durchschnittlich bei 11,3° C, wobei ein pH-Wert von 7,03 und eine Leitfähigkeit von ca. 1100 mV erreicht wurde. Die Säurekapazität betrug 3,6 und der BSB₅ 3 mg/l und der CSB 39,5 mg/l.

Der Ablauf 16 wurde dem Gebrauchwasserspeicher 17 zugeleitet und war klar und ohne Geruch, wie bei sehr gut gereinigten Abwässern bei Großkläranlagen. Der Belebtschlamm der in diesem Fall überdimensionierten Belebungskammer 6 - weil die Vorrichtung 1 schon vorhanden war - wies ein mikroskopisches Bild auf, wo sehr viele Rädertierchen bzw. schöne Flockenbildung zu erkennen war. Ein derart gereinigtes Abwasser kann für Gebrauchswasser bzw. für Klospülungen wieder verwendet werden, wodurch viel Trinkwasser eingespart werden kann. Falls es als Nutzwasser nicht benötigt wird, kann dieses vollbiologisch gereinigte Wasser kontinuierlich dem Vorfluter 18 zugeführt werden, wodurch sich auch der Abwasserkreislauf wieder schließt.

In den zuvor beschriebenen Ausführungsbeispielen gemäß den Fig. 1 bis 3 wurden alle aus dem Stand der Technik hinlänglich bekannten Einzelteile, wie beispielsweise der Antriebsmotor 46 für das Rührwerk 9 sowie die entsprechenden Steuerleitungen, die Energiequelle, die Lagerstellen und andere Teile entweder nur schematisch vereinfacht dargestellt oder überhaupt weggelassen, da sie dem Fachmann sowohl hinsichtlich deren Anordnung als auch deren Ausführung bestens bekannt sind und auch die unterschiedlichen Materialien, aus deren derartige Einrichtungs- und Vorrichtungsteile herzustellen sind.

Es wurden desweiteren auch nur schematisch zwei Sonden zum Erfassen von Meßwerten im Becken 4 schematisch dargestellt. Selbstverständlich können sowohl im Bereich des Zulaufs 2 als auch im Bereich des Ablaufs 16 bzw. in den verschiedenen Kammern beliebig viele solcher Sonden 20 zum Erfassen der unterschiedlichen Meßwerte, insbesondere des Stickstoffaustrittes von Nitriten bzw. Nitraten, Ammonium, Sauerstoff und dgl. auch in unterschiedlichen Höhen über dem Boden 12 des Beckens 4 angeordnet sein.

Auch ist es möglich, anstelle der Anordnung der verschiedenen Kammern in einem großen Becken mehrere nebeneinander liegende Becken für die Denitrifikationskammer 5, die Belebungskammer 6 und die Nachklärkammer 7 vorzusehen und diese über entsprechende Rohrleitungen miteinander zu verbinden.

Desweiteren ist auch in dem Ausführungsbeispiel gemäß den Fig. 1 und 2 die Anordnung einer Belüftungsleitung 33 möglich, wie dies in Fig. 2 der Einfachheit halber mit strichlierten Linien eingetragen wurde.

Während es möglich ist, durch entsprechende Ausbildung des Schlammschlitzes 11 bzw. des Anschlußstutzens 43 ein Hochsteigen von Gasblasen 21, 25 in die Nachklärkammer 7 zu verhindern, ist es selbstverständlich auch möglich, dies durch entsprechend aufgesetzte Abweiser vorzunehmen. Um auch die Phosphate aus den Abwässern bei derartigen Kleinkläranlagen ausfällen zu können, kann es sich weiters als vorteilhaft erweisen, im Anschluß an die Denitrifikationskammer 5, also beispielsweise in der Belebungskammer 6, ein Elektrodenpaar 47, 48 anzuordnen, die als Anode bzw. Kathode geschaltet und mit der Steuerung 19 verbunden sind. Dadurch kann das Phosphat mit dem im Abwasser vorhandenen Kalzium reagieren und nicht mit dem Stickstoff, und fällt aus. Das restliche Phosphat, das nicht ausfällt, wird in der jeweils anschließenden Belüftungsphase, in der das Belüftungssystem 8 aktiviert ist, vom Belebtschlamm wiederaufgenommen. Der Vorteil dieser Phosphatausfällung mittels eines elektrochemischen Verfahrens liegt darin, daß ohne die Zugabe von Fällmittel das Phosphat reduziert werden kann. Mit dem Ausbringen des Phosphats können auch andere Schwermetalle, Kalium, Kalzium oder dgl. abgesondert werden. Selbstverständlich ist die Anzahl der Elektrodenpaare 47, 48, um die eingesetzten Stromstärken auf die jeweilige Größe der Vorrichtung 1 abzustimmen und eine elektrochemlsche Zerlegung des Wassers zu vermeiden und nur eine Wasserstoff-Ionen-Konzentration zu erzeugen.

Selbstverständlich ist beim Betrieb derartiger Kläranlagen darauf zu achten, daß keine hydraulischen Überlastungen, beispielsweise durch die übermäßige Zufuhr von Oberflächen- oder Regenwasser auftreten, um zu verhindern, daß Belebtschlamm, der in der Nachklärkammer 7 hochgestiegen ist, durch den Ablauf 16 abtreiben kann.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

### Bezugszeichenaufstellung

- 1: Vorrichtung
- 2: Zulauf
- 3: Abwasser
- 4: Becken
- 5: Denitrifikationskammer
- 6: Belebungskammer
- 7: Nachklärkammer
- 8: Belüftungssystem
- 9: Rührwerk
- 10: Schlammdurchlaß
- 11: Schlammschlitz
- 12: Boden
- 13: Schutzschild
- 14: Längsachse
- 15: Ebene
- 16: Ablauf
- 17: Gebrauchwasserspeicher
- 18: Vorfluter
- 19: Steuerung
- 20: Sonde
- 21: Gasblasen
- 22: Pfeil
- 23: Bodenwand
- 24: Außenmantel
- 25: Gasblasen
- 26: Pfeil
- 27: Auslaßöffnung
- 28: Flüssigkeit
- 29: Rücklaufschlamm
- 30: Winkel
- 31: Bodenwand
- 32: Winkel
- 33: Belüftungsleitung
- 34: Sauerstoff
- 35: Pumpe
- 36: Rohr
- 37: Durchmesser
- 38: Längsachse
- 39: Stirnseite
- 40: Distanz
- 41: Rohr
- 42: Stutzen
- 43: Anschlußstutzen
- 44: Mittelwand
- 45: Stirnkante
- 46: Antriebsmotor
- 47: Elektrode
- 48: Elektrode

## Patentansprüche

1. Verfahren zur Reinigung von Abwasser (3), bei dem das Abwasser (3) gegebenenfalls nach einer Denitrifizierung durch Sauerstoffzufuhr und durch Aufrühren des Belebtschlammes aufgewirbelt wird, sodaß er in Richtung der Flüssigkeitsoberfläche hochsteigt und mit dem Rührwerk (9) in eine im Bereich des Belebtschlammes angeordnete, in Richtung des Rührwerkes (9) geöffnete Nachklärkammer (7) hochgedrückt wird, dadurch gekennzeichnet, daß ein senkrechter Strömungseintritt von durch den Belebtschlamm hochsteigenden Gasblasen (21) in die Nachklärkammer (7) durch ein Schutzschild (13) verhindert wird.

2. Verfahren nach Anspruch 1, dadurch gekennzeichnet, daß ein Intervall zwischen den einzelnen Perioden, in welchen dem Belebtschlamm Sauerstoff zugeführt wird, während der Nachtstunden verlängert ist.

3. Verfahren nach Anspruch 1 oder 2, dadurch gekennzeichnet, das in der Belebungskammer über elektro-chemischen Weg die Phosphate ausgefällt werden.

4. Vorrichtung zur Reinigung von Abwasser mit einem Becken (4), in dem sich verschiedene Kammern wie eine Denitrifikationskammer (5), eine Belebungskammer (6) und eine Nachklärkammer (7) befinden und bei der das Abwasser (3) gegebenenfalls über eine Denitrifikationskammer (5) einer dieser nachgeschalteten Belebungskammer (6) zugeleitet und von dieser über einen Schlammdurchlaß (10) einer Nachklärkammer (7) weitergeleitet wird, die über einen Ablauf (16) mit einem Gebrauchwasserspeicher (17) und/oder einem Vorfluter (18) in Verbindung steht und mit einem in der Belebungskammer (6) angeordneten Belüftungssystem (8), z.B. einem Rührwerk (9), und mit einem in einem Stirnendbereich der Nachklärkammer (7), welcher einem Boden (12) des Beckens (4) zugewandt ist, angeordneten Schlammschlitz (11) oder Anschlußstutzen (43), dadurch gekennzeichnet, daß der Schlammschlitz (11) oder der Anschlußstutzen (43) mit einem bevorzugt durch Teile des Schlammschlitzes (11) bzw. des Anschlußstutzens (43) gebildeten Schutzschild (13) versehen ist, welches eine Querschnittsfläche des Schlammschlitzes (11) bzw. des Anschlußstutzens (43) in einer zur Längsachse (14) des Beckens (4) senkrechten Ebene (15) unter Beibehaltung des Schlammdurchlasses (10) zur Gänze überlappt.

5. Vorrichtung nach Anspruch 4, dadurch gekennzeichnet, daß eine Stirnseite eines rohrförmigen Anschlußstutzens (43) unter einem Winkel (30) von z.B. 60° gegenüber einer Längsachse (38) der Nachklärkammer (7) geneigt angeordnet bzw. ausgebildet ist und daß der als Schutzschild (13) wirkende vorragende längere Teil des Anschlußstutzens (43) näher zum Boden (12) des Beckens (4) oder Belebungskammer (6) angeordnet ist.

6. Vorrichtung nach Anspruch 4, dadurch gekennzeichnet, daß der Schlammdurchlaß (10) durch zwei gegengleich geneigte Bodenwände (23, 31) gebildet ist, die den Schlammdurchlaß (10) als Schlammschlitz (11) ausbilden, wobei eine der Bodenwände (31, 23) zur Ausbildung eines Schutzschildes (13) über den Schlammdurchlaß (10) in Richtung der gegenüberliegenden Bodenwand (23, 31) vorragt und diese um eine Distanz (40) überragt.

## Claims

1. Method for purifying waste water (3), in which the waste water (3) is stirred if necessary after denitrification by the addition of oxygen and by agitating the activated sludge, so that it rises in the direction of the liquid surface, and by means of the agitator (9) is pushed up into a final settling chamber (7) that is open in the direction of the agitator (9) and arranged in the region of the activated sludge, characterised in that a vertical inflow of gas bubbles (21) rising through the activated sludge into the final Settling chamber (7) is prevented by a protective shield (13).

2. Method according to claim 1, characterised in that an interval between the individual periods, in which oxygen is added to the activated sludge, is extended during night hours.

3. Method according to claim 1 or 2, characterised in that in the activation chamber the phosphates are precipitated electrochemically.

4. Device for purifying waste water with a tank (4), in which there are various chambers, such as a denitrification chamber (5), an activation chamber (6) and a final settling chamber (7), and in which the waste water (3) if necessary is supplied via a denitrification chamber (5) to an activation chamber (6) connected thereafter, and is transported from the latter via a sludge outlet (10) of a final settling chamber (7), which is in connection with a processed water reservoir (17) and/or discharge ditch (18) via a run-off (16), and with a ventilation system (8) arranged in the activation chamber (6), e.g. an agitator (9), and with a sludge slot (11) or connection point (43) arranged in a front end region of the final settling chamber (7), which faces a base (12) of the tank (4), characterised in that the sludge slot (11) or the connection point (43) is provided with a protective shield (13) formed preferably by parts of the sludge slot (11) or the connection point (43), which protective shield overlaps a cross sectional area of the sludge slot (11) or the connection point (43) in a plane (15) perpendicular to the longitudinal axis (14) of the tank (4), while maintaining the sludge outlet (10) to the whole.

5. Device according to claim 4, characterised in that a front face of a tubular connection point (43) is inclined or arranged at an angle (30) e.g. of 60° relative to a longitudinal axis (38) of the final settling chamber (7), and in that the projecting longer part of the connection point (43) acting as a protective shield (13) is positioned closer to the base (12) of the tank (4) or activation chamber (6).

6. Device according to claim 4, characterised in that the sludge outlet (10) is formed by two base walls (23, 31) inclined towards one another, which form the sludge outlet (10) as a sludge slot (11), whereby one of the base walls (31, 23) projects over the sludge outlet (10) in the direction of the opposite base wall (23, 31) to form a protective shield (13) and projects beyond the latter by a distance (40).

## Revendications

1. Procédé pour l'épuration d'eaux résiduaires (3), dans lequel on soulève en tourbillons les eaux résiduaires (3), le cas échéant après une dénitrification par apport d'oxygène et par agitation des boues activées de façon qu'elles remontent dans la direction de la surface du liquide et qu'elles soient pressées vers le haut avec le mélangeur (9) dans une chambre de décantation (7) ouverte agencée dans la zone des boues activées dans la direction du mélangeur (9), caractérisé en ce qu'une entrée perpendiculaire au courant des bulles de gaz (21) nontant des boues activées dans la chambre de décantation (7) est empêchée par un écran protecteur (13).

2. Procédé selon la revendication 1, caractérisé en ce qu'un intervalle entre les périodes individuelles dans lesquelles de l'oxygène est conduit aux boues activées est prolongé pendant les heures de la nuit.

3. Procédé selon la revendication 1 ou 2, caractérisé en ce que, dans la chambre d'activation, les phosphates sont précipités par des voies électrochimiques.

4. Dispositif pour l'épuration d'eaux résiduaires avec un bassin (4), dans lequel se trouvent diverses chambres telles qu'une chambre de dénitrification (5), une chambre d'activation (6) et une chambre de décantation (7) et où les eaux résiduaires (3) sont conduites, le cas échéant, par une chambre de dénitrification (5), à une chambre d'activation (6) suivant celle-ci et de là sont conduites plus loin par un passage des boues (10), à une chambre de décantation (7) qui est en liaison par une décharge (16) avec une réserve d'eaux usées (17) et/ou un collecteur (18) et avec un système d'aération (8) agencé dans la chambre d'activation (6), par exemple un mélangeur (9) et avec une fente (11) pour les boues agencée dans une zone d'extrémité frontale de la chambre de décantation (7) et tournée vers un fond (12) du bassin (4) ou bien un embout de raccordement (43), caractérisé en ce que la fente (11) pour les boues ou l'embout de raccordement (43) est pourvu d'un écran protecteur (13) formé préférentiellement par une partie de la lente (11) pour les boues ou respectivement de l'embout de raccordement (43) qui recouvre une surface de la section transversale de la lente (11) pour les boues ou respectivement de l'embout de raccordement (43) dans un plan (15) perpendiculaire à l'axe longitudinal (14) du bassin (4) en conservant le passage des boues (10), en totalité.

5. Dispositif selon la revendication 4, caractérisé en ce qu'un côté frontal d'un embout tubulaire (43) de raccordement est agencé ou respectivement configuré avec un angle (30), par exemple de 60° vis-à-vis d'un axe longitudinal (38) de la chambre de décantation (7) et que la partie plus longue qui dépasse, qui agit comme écran protecteur (13) de l'embout de raccordement (43) est agencée plus près du fond (12) du bassin (4) ou de la chambre d'activation (6).

6. Dispositif selon la revendication 4, caractérisé en ce que le passage pour les boues (10) est formé de deux parois de fond inclinées en vis-à-vis (23, 31) qui forment le passage des boues (10) en tant que lente (11) pour les boues et l'une des parois de fond (31, 23) dépasse, pour la formation d'un écran de protection (13), sur le passage pour les boues (10) dans la direction de la paroi de fond (23, 31) en vis-à-vis et cela sur une distance (40).
